# EUROPEAN PATENT APPLICATION

(11) **EP 4 806 669 A1**
(43) Date of publication of application: **16.09.2026**
(21) Application number: 26153445.7
(22) Date of filing: 22.01.2026
(51) Int. Cl.: B60C 23/00, B60C 23/04, B60P 1/00, B60P 3/00, B62D 53/00, B62D 55/00, B62D 63/02, B63B 25/00

(54) **TRANSPORT MODULE FOR FORMING MODULAR CONVOYS FOR THE TRANSPORT OF EXCEPTIONAL CARGOES, AND MODULAR CONVOY PROVIDED WITH SUCH TRANSPORT MODULES**

(30) Priority: 13.03.2025 IT 202500005118
(71) Applicant: COMETTO S.p.A., 12011 Borgo San Dalmazzo (IT)
(72) Inventor: LIPPI, Fabrizio, 12011 BORGO SAN DALMAZZO (CN) (IT); GIORDANO, Gabriele, 12011 BORGO SAN DALMAZZO (CN) (IT); D'AGOSTINO, Willian, 12011 BORGO SAN DALMAZZO (CN) (IT); FICKERS, Alexander, 12011 BORGO SAN DALMAZZO (CN) (IT)
(74) Representative: Studio Torta S.p.A.

(57) **Abstract**

A transport module (2) for forming modular convoys (50) for the transport of exceptional cargoes has a loading platform (6) and a plurality of axles (7) provided with respective wheels (9); the transport module (2) has a first electronic control unit (30) that is configured to control operations of said wheels (9) in response to commands sent by a second electronic control unit (34); each wheel (9) has a monitoring device (20), which detects the pressure in the wheel (9), has a unique identifier and communicates in wireless mode with a transmission device (40) installed on the transport module (2); the transmission device (40) receives pressure data from all the monitoring devices (20), with respective identifiers, and communicates it to the first electronic control unit (30); the latter is configured so as to combine the identifiers of the monitoring devices (20) with positions of the wheels (9) on which the monitoring devices are actually installed (20).

## Description

### Cross-reference to related applications

This patent application claims priority from Italian patent application no. 102025000005118, filed on March 13, 2025, the entire disclosure of which is incorporated herein by reference.

### Technical field

The present invention relates to a transport module, usable for forming modular convoys, usually indicated with the acronym SPMT (Self-Propelled Modular Transporter), for the transport of exceptional cargoes.

### Context

In the automotive field, it is known to form modular convoys, called SPMT as indicated above, and provided with a series of transport modules, each of which has a plurality of axles and an upper loading platform. The transport modules are connected to each other and arranged in side-by-side and aligned positions, so as to form one or more rows, in order to define overall, thanks to the set of platforms, a desired cargo surface, capable of transporting exceptional cargoes. These cargoes have a weight than can range from hundreds of tons to tens of thousands of tons.

In detail, the transport modules can have three, four or six axles, and each axle has a plurality of wheels provided with tyres. At least some of the wheels are driving wheels, under the action of an operating fluid circulating in a hydraulic system, that also manages the steering operations and the suspensions associated with the axles.

At the end of each row of transport modules, the convoy has a respective power module, usually indicated with the term "power pack", and comprising a hydraulic power unit configured so as to power the hydraulic systems provided on the transport modules of the respective row.

The power modules have respective electronic control units, which communicate with one another, and also with the electronic control units installed in the transport modules of the same row, so as to form a data communication network.

The electronic control units are configured so as to command and control, in a coordinated manner, the operation of the valves and the actuators in the hydraulic systems of the transport modules. In particular, the electronic control unit installed on one of the power modules plays a main role (known as the "master"), whereas the other power modules play a secondary role, known as the "slave". The result is that the transport modules and the power modules form a single and integrated system, which can be managed through a single instrument panel: the latter communicates in wireless mode with the "master" electronic control unit and is provided with a radio control for remote control of the convoy.

Use of SPMT is generally at construction sites and is of the intermittent type. In other words, the SPMT are only assembled and used extemporaneously, i.e. when it is actually necessary to move an exceptional cargo. In particular, the time needed for the preliminary phases, in which the transport modules are assembled and checked, is high, for example in the order of one or several weeks, whereas actual movement of the cargo takes just a few hours.

In the preliminary phases, a part of the time is spent to carefully check the correct inflation pressure of the wheel tyres. In fact, it is necessary to consider that, due to the heavy cargoes to be supported, the tyres are inflated at higher pressures than the standard ones, for example pressures close to 25 bar. Considering the size of the cargo that each wheel must support, ruptures could occur extremely rapidly if the tyre is not correctly inflated, due to the considerable deformation of the carcass under load in the tyre. Possible bursting of a tyre, in the transport conditions as described above, would have disastrous consequences.

Furthermore, it is necessary to consider that an SMPT has an extremely high number of wheels, due to the number of transport modules that form the convoy as a whole and, above all, due to the number of axles for each of those transport modules. Therefore, in order to reduce the times needed to check the inflation pressure on the entire convoy, there is a need to install a respective pressure monitoring device on each wheel, which is usually indicated with the acronym TPMS (Tyre Pressure Monitoring System).

Typically, these devices have a pressure sensor and a data transmission system, with an antenna for transmitting, in wireless mode, the data on the pressure values that have been detected by the sensor. In particular, the TPMS available on the market, for both the automobile and the goods transport sectors, after being installed on the respective wheels, transmit the data, by means of their antenna, to a video screen, or monitor, available to the driver of the vehicle. Such monitor has a graphic interface with a configuration that is dedicated to the number and to the position of the wheels present on such vehicle, and that uniquely associates the displayed pressure data with the specific wheel from which such data actually originates.

Solutions of this type only manage a predefined configuration of wheels, which is set, once and for all, on the vehicle instrument panel after installation of the TPMS on the wheels. In the case of an SPMT, however, these solutions are not so simple to apply.

In fact, the possible configurations for the position and the number of wheels are always different, based on the composition of the convoy that is formed each time by assembling the transport modules actually needed to transport the cargo. Therefore, assuming that the TPMS transmit the pressure data directly to the instrument panel which controls and remotely drives the convoy, it would be necessary to configure such instrument panel each time a new convoy is assembled, in order to correlate the pressure data displayed on the instrument panel with the actual position of the wheel from which such data arrives.

This initial setting, to be performed upon assembly of each new convoy, would require relatively high checking and configuration times, which it is opportune to avoid.

In light of what has just been stated, there is a need to install a TPMS on each wheel of the transport modules used to assemble the SPMT, but with procedures that allow the configuration times to be reduced to the minimum.

The object of the invention is therefore to satisfy the need indicated here above, preferably in a simple and/or efficient and/or economical way.

### Contents

The aforesaid object is achieved by a transport module for forming modular convoys for the transport of exceptional cargoes, as defined in claim 1.

The present invention also relates to a modular convoy for the transport of exceptional cargoes, as defined in claim ..........

The dependent claims define particular embodiments of the invention.

### Brief description of the drawings

For a better understanding of the present invention, preferred embodiments will be described below, by way of non-limiting example, with reference to the appended drawings, in which:
- Figure 1 shows, in a simplified perspective, several modules usable for forming modular convoys for the transport of exceptional cargoes;
- Figure 2 is a perspective view that shows, with schematised parts, a preferred embodiment of the transport module according to the present invention;
- Figure 3 is a perspective, on enlarged scale, of a wheel of the transport module of Figure 2; and
- Figure 4 shows, with schematised parts, a modular convoy formed of a plurality of transport modules, according to the dictates of the present invention.

### Description of preferred embodiments

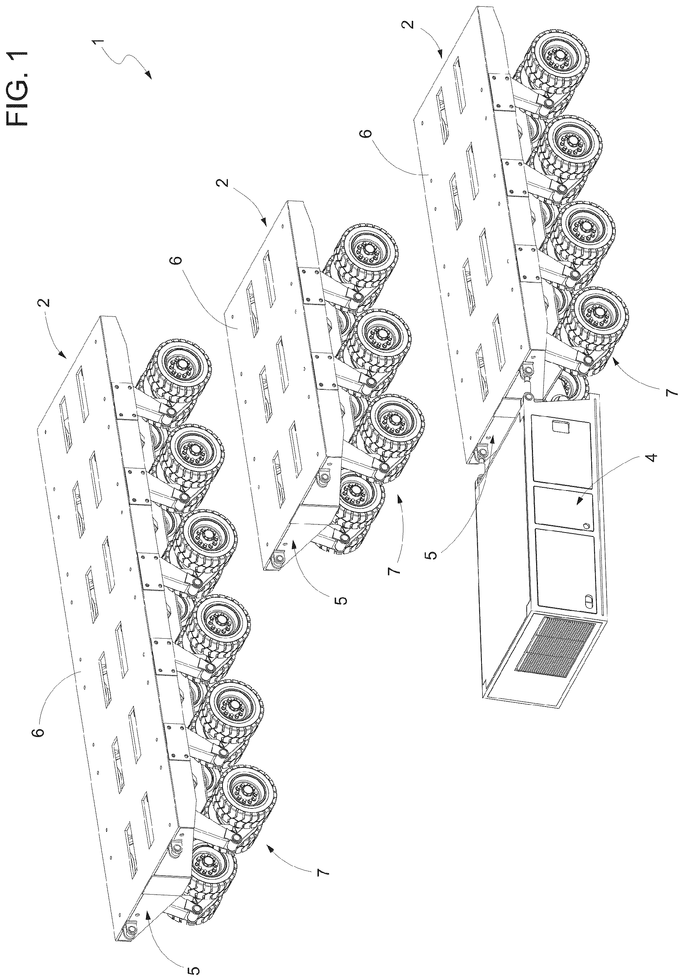

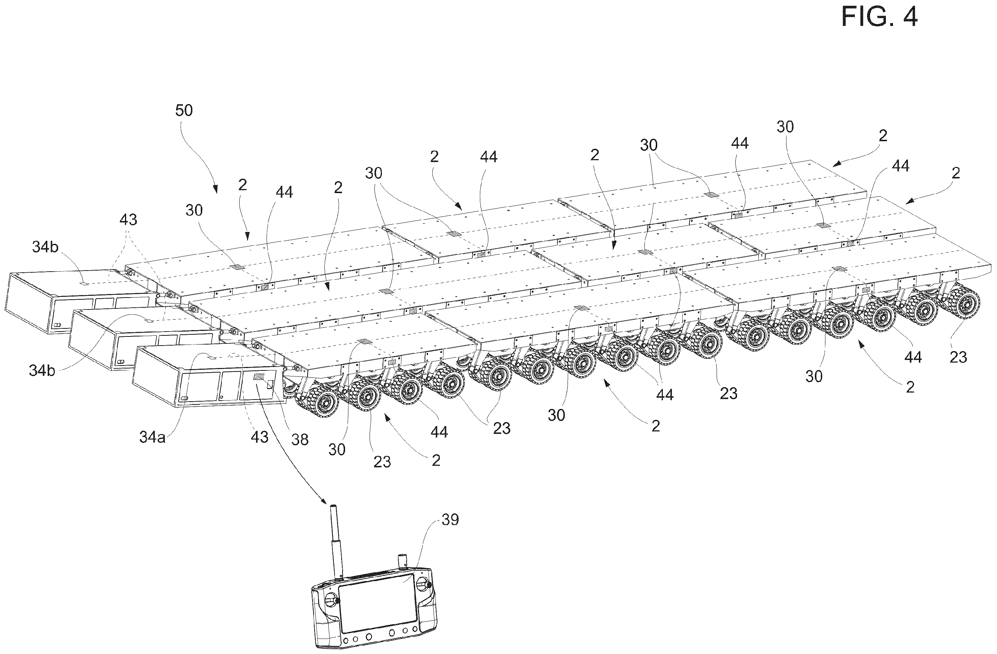

In Figure 1, reference number 1 indicates, in its entirety, a set of modules usable for forming modular convoys, for example the remote-controlled modular convoy indicated with reference number 50 in Figure 4. Convoys such as the one shown in Figure 4 are indicated with the acronym SPMT (Self-Propelled Modular Transporter) and are used for the transport of exceptional cargoes.

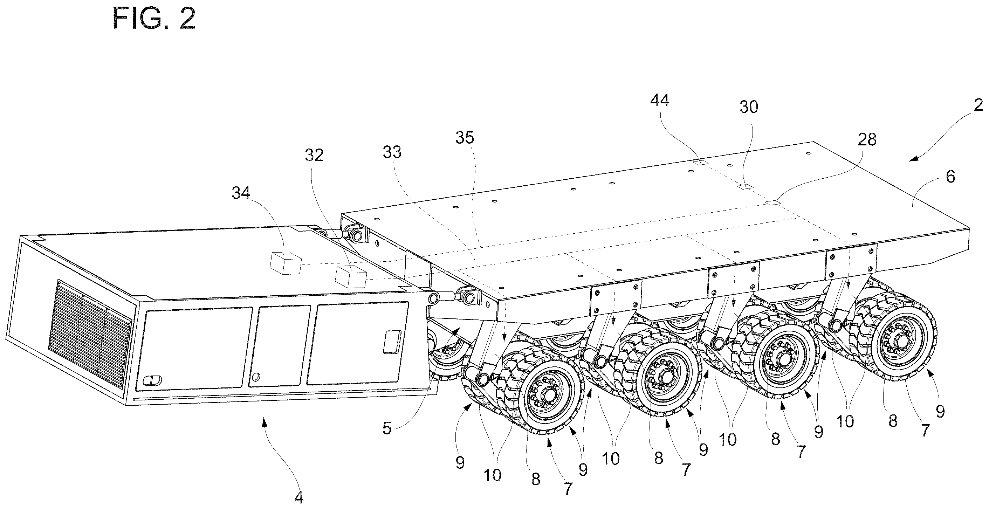

Once again with reference to Figure 1, the set 1 is formed of transport modules 2 and power modules 4, also called "power packs". Each transport module 2 has a chassis 5 that comprises an upper loading platform 6 and supports a plurality of axles 7 by means of respective suspensions 8 (Figure 2). Typically, the transport modules 2 can have three, four or six axles 7.

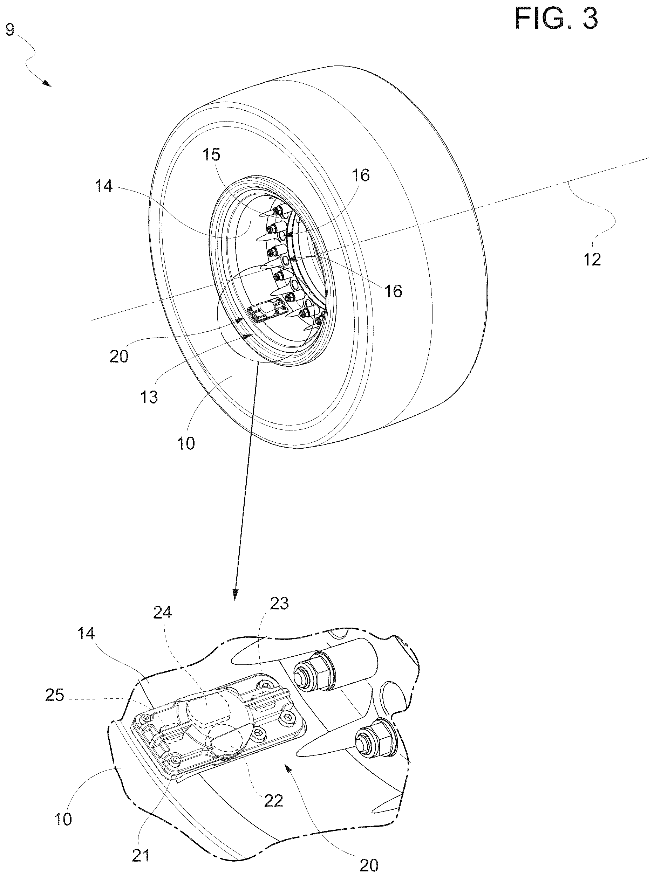

With reference to Figure 2, each axle 7 has a plurality of wheels 9, provided with tyres so as to define an air chamber that can be pressurised. In particular, as shown in Figure 3, each wheel 9 has an axis 12, coinciding with its rotation axis, and comprises a rim 13 which, in turn, comprises an outer annular wall 14, onto which the tyre 10 is fitted. The rim 13 supports an inflation valve, not shown, in fixed position, in order to pressurise the air chamber defined by the tyre 10 and by the wall 14 and comprises an attachment portion 15, which is fixed to the hub of the corresponding axle 7, for example by means of screws that cross respective holes 16 made in such portion 15 and, for example, is defined by a flange that projects radially from the wall 14.

According to an aspect of the present invention, the wheel 9 further comprises a device 20 for monitoring the air pressure in the chamber of the tyre 10. As schematically shown in the enlargement of Figure 3, the device 20 comprises a casing 21 that is fixed to the rim 13, for example by means of screws, and is connected to a pressure sensor 22 arranged in a position such as to be able to detect the air pressure in the chamber of the tyre 10. The casing 21 houses: an antenna 23 for transmitting data in wireless mode; a printed circuit board 24, connected to the sensor 22 for receiving signals indicative of the detected pressure, and to the antenna 23 for transmitting to the outside data on such detections; and a battery 25 to supply electricity to the circuit board 24 and/or to the antenna 23 and/or to the sensor 22. In other words, the device 20 is configured so as to transmit the data on the detected pressure, in wireless mode, through its antenna 23.

With reference to Figure 2, at least several of the wheels 9 are driving wheels, and at least several of the axles 7 are steering axles, under the action of an operating fluid circulating in a hydraulic system 28, schematically shown, of known type and not described in detail, installed on the transport module 2. In particular, the hydraulic system 28 is also configured to control the dynamic response of the suspensions 8 associated with the axles 7.

Furthermore, the transport module 2 comprises an electronic control unit 30, schematically shown, configured so as to control the actuators and the valves of the corresponding hydraulic system 28.

With reference to Figure 4, when a convoy 50 is assembled, the transport modules 2 are arranged in positions aligned with each other along one or more rows, and a respective power module 4 is installed for each row, at an end of such row. In particular, the power modules 4 are configured so as to be connected to the chassis 5 of the transport modules 2, in a known way and not described in detail, in order to be carried cantilevered at an end thereof. The platforms 6, together, form a single cargo surface suitable for the transport of an exceptional cargo, with dimensions that vary based on the number and the arrangement of the transport modules 2.

With reference to Figure 2, each power module 4 comprises a hydraulic power unit 32 (schematically shown) suitable to be connected to the hydraulic systems 28 of the transport modules 2 of the same row, when the convoy 50 is formed, through hydraulic connections 33 schematically shown: once connected, the hydraulic power unit 32 supplies the pressurised operating fluid to the hydraulic systems 28 of the transport modules 2 of the same row.

Furthermore, each power module 4 comprises an electronic control unit 34, which is suitable to be connected by wire to the electronic control units 34, 30 of the other modules 4,2, through connection lines 35, schematically shown.

In particular, with reference to Figure 4, when the convoy 50 is formed, each electronic control unit 34 is connected by wire to the electronic control units 34 of the power modules 4 which are arranged in adjacent positions, and to the electronic control units 30 of the transport modules 2 that are arranged along the same row. More in particular, when there are several rows, one of the electronic control units 34 plays a main role, indicated as "master", whereas the others play a secondary role, known as "slave" (in Figure 4, the "master" electronic control unit is indicated with reference number 34a, whereas the "slave" electronic control units are indicated with reference number 34b).

The electronic units 34a and 34b are provided with respective antennas for wireless communication from/to an instrument panel. In detail, the master electronic unit 34a is configured so as to communicate, through its own antenna 38, with an instrument panel 39 which is arranged in a remote position, is the portable type and is provided with a radio control for remote control of the convoy 50. In particular, in the slave electronic units 34b, the antenna (not shown) remains unused.

During transport of the exceptional cargo on the convoy 50, the control units 30 command the operations (rotation, steering, braking, shock absorption, etc.) of the wheels 9 that are installed on the respective transport module 2, operating the actuators and the valves of the corresponding hydraulic system 28, based on the command signals sent by the electronic control units 34, in particular command signals sent by the master electronic unit 34a. More in particular, the electronic units 34a and/or 34b are configured, in a known way and not described in detail, to coordinate the command signals necessary for controlling the operations of all the wheels 9, based on the commands set by the operator and received through the instrument panel 39 and based on any feedback data coming from such transport modules 2.

The connection lines that place the electronic units 34a, 34b and 30 in communication form a cabled communication network, indicated in its entirety with reference number 40 in Figure 4. In particular, Figure 4 shows that, in each row of transport modules 2, the electronic control units 30 are connected in series (but could possibly be connected in parallel). More in particular, the communication network 40 has a "comb-like" structure, where each electronic unit 34a,34b is connected with the electronic units 34b, 34a of the power modules 4 that are adjacent, so as to form a primary communication line 42, from which a respective secondary communication line 43 departs for each row of transport modules 2, so as to connect by wire the electronic control units 30 of such row.

The signals and/or data along the communication network are transmitted in combination with identifiers and/or information, which allow the source and the recipient of such data and/or signals to be identified. In particular, each transport module 2 (i.e. each electronic control unit 30) has a unique identifier, which is recognised by the electronic control units 34a,34b when such units receive data coming from the transport modules 2.

According to the present invention, each transport module 2 comprises a respective data transmission device 44, which is defined, for example, by a router, has an antenna 45 for communicating in wireless mode, and is connected to the corresponding electronic control unit 30 by wire, for example through a dedicated connection line. According to an alternative, not shown, the device 44, with its antenna 45, is integrated into the electronic control unit 30.

The device 44 is associated with all the devices 20 that are installed on the respective transport module 2, by means of the technique commonly known as "pairing", so that the antenna 45 is in communication with the antennas 45 of such devices 20. Thanks to this association, the device 44 of a given transport module 2 does not communicate with the devices 20 that are installed on the other transport modules 2.

The device 44 communicates the pressure data coming from the devices 20 to the respective electronic control unit 30. The latter, when the convoy 50 is formed, forwards the pressure data received towards the corresponding control unit 34a,34b arranged at the end of the corresponding row on the convoy 50. In turn, the slave electronic units 34b forward the pressure data along the primary communication line 42 to the master electronic unit 34a which, in turn, forwards it, in wireless mode, to the instrument panel 39.

Each device 44 has a unique identifier, which is preferably combined with the identifier of the transport module 2 where it is installed, for example by means of an initial configuration or setting performed by an operator on the corresponding electronic control unit 30. The electronic control unit 30 is configured so as to transmit, in the communication network 40, the pressure data in combination with the identifier of its own transport module 2 (as for any other information transmitted in the communication network 40) so as to be able to recognise from which transport module 2 the pressure data originates.

At the same time, each device 20 has a unique identifier, which is received by the device 44 and is communicated, together with the pressure data, to the electronic control unit 30.

The latter, in other words, receives pressure data combined with a unique identifier, relating to the specific device 20 from which such data originates. The electronic control unit 30 is configured or set manually by an operator, at the start of the operating life of the transport module 2, so as to combine, bijectively, the identifier of each device 20 with the specific position of the wheel 9 on which such device 20 is installed, on the same transport module 2. This combination is stored in a memory which, for example, forms part of the electronic control unit 30. This combination can be defined by an alphanumeric code (to be interpreted on the basis of a predefined key), by a descriptive sentence, by a table, by an image that graphically depicts the position of the wheel, etc.

Thanks to this initial configuration or setting, the electronic control unit 30 is capable of transmitting, together with the pressure data received and with its own identifier (i.e. the identifier of the transport module 2 of origin, from which the transmission starts), also the specific information on the position of the wheel 9 of origin, from which such pressure data on the same transport module 2 originates.

In this manner, the electronic control units 34a, 34b and/or the instrument panel 39 automatically establish the provenance of all the pressure data that they receive through the communication network 40, by means of the identifier of the transport module 2 of origin and by means of the information on the position of the wheel 9 of origin.

As a direct consequence, for example, if the received pressure data indicates that one of the monitored pressures is below a given threshold, the master electronic unit 34a is configured to promptly request a check on the pressure in the corresponding tyre 10, sending a warning or alarm to the instrument panel 39 and indicating on which transport module 2 and on which wheel 9 it is precisely necessary to intervene. As an alternative or in combination, the master electronic unit 34a can be configured so as to autonomously adopt appropriate countermeasures to limit the risks of accidents (for example, to command a slowdown of the wheels 9 or an arrest of the convoy 50).

According to a variant, not shown, the device 44 and/or the electronic control unit 30 of each transport module 2 can be connected to a monitor, which allows, through a buffer battery, the pressure of the wheels 9 to be visually checked when the transport module 2 is not powered by the power module 4, for example during the preliminary checking phases that precede formation of the convoy 50. In this case as well, the electronic control unit 30 automatically associates the pressure data received from the device 44 with the position of the wheel 9 of origin, from which such data originates (thanks to the initial configuration or setting as described above, performed by the operator to store the combination between the identifiers of the devices 20 and the specific positions of the wheels 9 on which such devices 20 are actually mounted in the transport module 2).

It is clear from the above that the monitoring of the pressure of all the tyres 10 uses a basic configuration, which is well established in the solutions of the prior art, in which the identifier of the transport module 2 from which the data/signals transmitted in the communication network 40 originate is transmitted. A single additional configuration for each transport module 2 is necessary, at the start of its operating life, in order to combine the identifiers of the devices 20 with the actual positions of the wheels 9 on which such devices 20 are mounted, in order to be able subsequently to identify, unequivocally, the provenance of the pressure data transmitted in the communication network 40.

Therefore, in the formation of each new convoy, it is not necessary to perform any other configuration in order to be able to precisely identify the provenance of the pressure data: the convoy is, practically, self-configured.

Furthermore, it is clear that the proposed solution is independent of the overall number of transport modules 2 which are assembled to form the convoys, and is independent of the number of wheels 9 present on that convoy.

In conclusion, it is also clear that changes and variants may be made to the transport module 2 and to the convoy 50 described above with reference to the appended drawings, without thus deviating from the scope of protection as defined by the appended claims.

In particular, the proposed solution is independent of the construction characteristics of the device 20 that is actually mounted on the wheels 9: it is solely necessary for such device to be configured so as to be associated, through "pairing", with the device 44, to detect the air pressure, and to transmit the detected pressure data in combination with its own identifier, which is then combined with the position of the corresponding wheel 9, through the initial configuration performed by the operator on the transport module 2.

The number of rows formed by the transport modules 2 on the convoy 50 could be different from what is illustrated by way of example: even a single row could be envisaged, with a single power module 4.

Furthermore, the transport modules could be used as trailers to attach to a tractor, in addition to being used to form an SPMT.

## Claims

1. A transport module (2) for forming modular convoys (50) for the transport of exceptional cargoes, the transport module (2) comprising:
- a chassis (5) having a loading platform (6);
- a plurality of axles (7) carried by said chassis (5) and provided with respective wheels (9), each comprising a respective tyre (10);
- a first electronic control unit (30) suitable to be connected by wire, in use, to a second electronic control unit (34) and configured to control operations of said wheels (9) in response to commands sent by said second electronic control unit (34); **characterised in that** each said wheel (9) comprises a respective pressure monitoring device (20) having a respective identifier and comprising:
- a respective pressure sensor (21), arranged in a position such as to detect an air pressure in the corresponding tyre (10) , and
- a respective first antenna (23) to transmit, in wireless mode, said identifier and pressure data related to the detected pressure;
wherein the transport module (2) further comprises a transmission device (40), which comprises a second antenna (45) for receiving, in wireless mode, identifiers and pressure data from all the pressure monitoring devices (20) installed on said wheels (9), and communicates with said first electronic control unit (30) for communicating said identifiers and said pressure data;
and wherein said first electronic control unit (30) is configured so as to combine said identifiers to positions of the wheels (9) on which said pressure monitoring devices (20) are respectively installed.

2. The transport module according to claim 1, wherein said first electronic control unit (30) is configured so as to transmit said pressure data by wire, in use, towards said first electronic control unit (34), in combination with information related to the position of the wheel (9) from which said pressure data originates and in combination with a unique identifier related to the transport module (2).

3. A modular convoy (50) for the transport of exceptional cargoes, the convoy comprising:
- a plurality of transport modules (2), each according to claim 2; the transport modules (2) being arranged in positions aligned to each other along at least one row;
- at least one power module (4) arranged at an end of said row and comprising a second electronic control unit (34a);
wherein said second electronic control unit (34a) is provided with a third antenna (38) for communicating with a remotely located instrument panel (39), and is connected by wire to the first electronic control units (30) of the transport modules (2) of said row, so as to define a communication network (40) and receive said pressure data, in combination with information related to the position of the wheel (9) from which said pressure data originates, and in combination with the unique identifier related to the transport module (2) from which said pressure data originates.

4. The modular convoy according to claim 3, wherein said second electronic control unit (34a) is configured so as to issue a warning to an operator, via said instrument panel (39), if said pressure data indicates that a pressure detected by one of said pressure monitoring devices (20) is below a given threshold.

5. The modular convoy according to claim 4, wherein said warning comprises information related to the transport module (2) and the position of the wheel (9) on which said pressure was detected.

6. The modular convoy according to claim 4 or 5, wherein said transport modules (2) are arranged in positions aligned with each other so as to form a plurality of rows, which have respective power modules (4) at one end, with respective second electronic control units (34) which are connected by wire to the first electronic control units (30) of the transport modules (2) of the same row, so as to receive said pressure data from the transport modules (2) of the same row, in combination with the information related to the position of the wheel (9) from which said pressure data originates, and in combination with the unique identifier related to the transport module (2) from which said pressure data originates; wherein one of said second electronic control units (34) is a master electronic unit (34a) communicating with said instrument panel (39), and the remaining second electronic control units (34b) are slave electronic units (34b), which communicate by wire with said master electronic unit (34a).
